# EUROPEAN PATENT APPLICATION

(11) **EP 4 287 329 A1**
(43) Date of publication of application: **06.12.2023**
(21) Application number: 23173310.6
(22) Date of filing: 15.05.2023
(51) Int. Cl.: H01M 10/04, H01M 10/613, H01M 10/647, H01M 10/6551, H01M 50/209, H01M 10/653, H01M 50/289, H01M 50/593, H01M 50/30

(54) **HOUSING FOR SECONDARY BATTERY CELLS**

(30) Priority: 16.05.2022 JP 2022079903
(71) Applicant: LSI Cooler Co., Ltd., Tokyo, Tokyo 167-0023 (JP)
(72) Inventor: YOSHIKAWA, Ryuichi, Tokyo, 167-0023 (JP)
(74) Representative: Eisenführ Speiser

(57) **Abstract**

A housing accommodating a plurality of secondary battery cells such as lithium-ion batteries, is compact, lightweight, and simple in structure, does not require drive power, and has sufficient air-cooling performance to keep the secondary battery at the required temperature during charging and discharging, and is compatible with dust prevention and waterproof in flooding. The housing 10 includes a first expansion/contraction member 21 as a first pressure mechanism and a plurality of second expansion/contraction members 22 as a second pressure mechanism. The first expansion/contraction member 21 is arranged between the inner surface of the cover portion 12 and the uppermost secondary battery cell 41. The second expansion/contraction member 22 is arranged between the side surface of the secondary battery cell 41 opposite to the side surface contacting the protruding portion of the heat conductive sheet 42 and the inner surface of the body portion 11.

## Description

### Technical Field

The present invention relates to a housing for secondary battery cells.

### Background Art

Conventional electric vehicles are equipped with a secondary battery such as a lithium-ion battery. Lithium-ion batteries generate heat during operation (during discharging) and during charging, and the appropriate temperature range is 25 °C to 35 °C from the viewpoint of maintaining the required charge/discharge performance and durability. In practice, lithium-ion batteries can be used over a wider temperature range, but it is desirable to maintain them between 0 °C and 45 °C. If the temperature of the lithium-ion battery becomes higher than this, the charging rate will decrease during charging, and the battery power will decrease during discharging. If the lithium-ion battery is used for a long period of time in the condition in which the temperature thereof deviates from the proper temperature range, the deterioration of the performance of the lithium-ion battery will be accelerated.

As a cooling method for lithium-ion batteries, water cooling is common for many electric vehicles. Lithium-ion batteries have plate-like shapes or cylindrical shapes. In the case of plate cells, cells are placed on cooling panels, and the heat emitted by the cells is transferred to the cooling water via cooling panels. In the case of cylindrical cells, the heat emitted by the cells is transferred to the cooling water by means of, for example, providing tubes through which the cooling water flows in the gaps between the cells.

Although these methods have the advantage of always being able to optimally control the cell temperature by controlling the temperature and flow rate of the cooling water, this requires complicated equipment and drive power, which leads to increase in the weight and cost of the electric vehicle and a reduction in cruising range. Therefore, the current situation is one in which the water-cooled type is limited to luxury electric vehicles of medium size or larger.

On the other hand, a method of cooling the lithium-ion battery with air has also been put into practical use in view of simplifying electric vehicles and reducing costs (see Patent Documents 1 and 2, for example). This is a system in which the flow of air during driving is drawn into the housing of the lithium-ion battery for ventilation. Therefore, it is necessary to provide gaps between lithium-ion battery cells so that air can flow as easily as possible. However, this hinders compactness of a housing (battery pack) that accommodates the lithium-ion battery cells. Because lithium-ion batteries carry a high voltage, it is essential for safety that both dust protection and waterproof in flooding be required. Another problem with the air-cooling system is that the motor power decreases when driving at high speed for long duration. In addition, while the lithium-ion battery heats up during charging, it is not possible to obtain the air-cooling capability that is available during driving. Therefore, the temperature of the battery rises, and it becomes difficult to charge the battery from about 55 °C to 60 °C. Furthermore, it has been pointed out that overheating of the battery would result in deterioration of the cell. Therefore, the air-cooling method for lithium-ion batteries is limited to use in relatively small electric vehicles where cost reduction is more important than performance.

As described above, there is currently a need for a simple, lightweight, and sufficiently efficient secondary battery cooling method. This method is essential for electric motorcycles and compact electric vehicles that meet light vehicle standards, which will continue to become more common in the future. It is also suitable for specialized electric vehicles such as electric construction equipment, forklifts, and agricultural automatic harvesting robots. In addition, it can also be applied to stationary charging equipment.

The Patent Documents are as follows.
Patent Document 1: Japanese Unexamined Patent Application Publication No. 2011-243358
Patent Document 2: Japanese Unexamined Patent Application Publication No. 2015-123924

### Summary of the Invention

Therefore, an object of the present invention is to provide a housing that accommodates secondary battery cells such as lithium-ion batteries, which features small, lightweight, and simple structure, does not require driving power, and has sufficient air-cooling performance to keep the secondary battery at a required temperature during charging and discharging, and provides both dust protection and waterproof in flooding.

To achieve the object, the housing of the present invention is,
(1) a housing accommodating a plurality of secondary battery cells in an inner space thereof and having a heat dissipation structure on the outside thereof, the housing comprising:
   a first pressing structure that presses the plurality of secondary battery cells that are stacked with a thermally conductive sheet interposed therebetween in a stacking direction;
   a second pressing structure that presses portions of the thermally conductive sheet that protrude laterally from the plurality of secondary battery cells against an inner surface of the housing.
(2) The second pressing structure preferably presses at least one secondary battery cell among the plurality of battery cells in a direction from one side surface to the other side surface of the mutually opposing surfaces having no electrodes, whereby a protruding portion of the thermally conductive sheet interposed between the other side surface of the at least one secondary battery cell and the inner side surface of the housing is pressed against the inner side surface of the housing.
(3) An intermediate member is preferably installed between the other side surface of the battery cell and the inner side surface of the housing, and the second pressing structure presses at least one secondary battery cell among the plurality of battery cells in a direction from one side surface to the other side surface, whereby a protruding portion of the thermally conductive sheet interposed between the intermediate member and the inner side surface of the housing is pressed against the inner side surface of the housing.
(4) At least one of the first pressing structure and the second pressing structure is preferably composed of an inflatable container filled with gas inside.
(5) At least a portion of the container is preferably composed of a thermally conductive member.
(6) At least one of the first pressing structure and the second pressing structure is preferably composed of an elastic biasing member.
(7) The thermally conductive sheet preferably has a thermal conductivity of 100 W/mK or more in a plane direction, and has the property of reducing the thermal contact resistance according to the pressure acting in a thickness direction.
(8) A hole with a diameter of 3 mm or less, or an opening of any shape with an equivalent area on the side, bottom, or a cover of the housing, is preferably provided.

The plurality of secondary battery cells and the thermal conductive sheet interposed therebetween are pressed by the first pressing structure. The thermal conductive sheet has the property of reducing the thermal contact resistance according to the pressure acting in the thickness direction. Thereby, heat is efficiently conducted from the secondary battery cells to the thermally conductive sheet. In addition, since the thermal conductivity of the thermally conductive sheet in the plane direction is high, the heat conducted from the secondary battery cell to the thermally conductive sheet is efficiently conducted in the plane direction of the thermally conductive sheet.

The second pressing structure presses the portion of the thermally conductive sheet that protrudes from the plurality of secondary battery cells against the inner surface of the housing, and adhesion of the protruding portion of the thermally conductive sheet and the inner surface of the housing is ensured. As a result, heat conducted from the secondary battery cells through the heat conductive sheet is efficiently conducted to the housing. Since there is a heat dissipation structure on the outside of the housing, the heat is efficiently released to the external space of the housing.

By forming a ventilation hole in the housing and reducing the diameter or size of the ventilation hole, entry of water and/or dust from the outer space of the housing into the inner space is suppressed or prevented. In addition, according to the temperature change of the secondary battery cell, and thus the temperature change of the air existing in the internal space of the housing, air is allowed to travel between the internal space and the external space of the housing through the ventilation holes. Therefore, the internal space of the housing is prevented from being improperly pressurized or depressurized.

### Brief Explanation of Drawings

Fig. 1 is a structural explanatory drawing of a housing for secondary battery cells as a First Embodiment of the present invention.
Fig. 2 is an explanatory drawing about the calculation result of secondary battery cell temperature distribution during discharging in an example.
Fig. 3 is an explanatory drawing about the calculation result of secondary battery cell temperature distribution during discharging in a comparative example.
Fig. 4 is an explanatory drawing about the calculation result of secondary battery cell temperature distribution during charging in an example.
Fig. 5 is an explanatory drawing about the calculation result of secondary battery cell temperature distribution during charging in a comparative example.
Fig. 6 is a structural explanatory drawing of a housing for secondary battery cells as a second embodiment of the present invention.
Fig. 7 is a structural explanatory drawing of a housing for secondary battery cells as a third embodiment of the present invention.
Fig. 8 is a structural explanatory drawing of a housing for secondary battery cells as a fourth embodiment of the present invention.
Fig. 9 is a structural explanatory drawing of a housing for secondary battery cells as a fifth embodiment of the present invention.

### Mode for Carrying Out the Invention

### First Embodiment

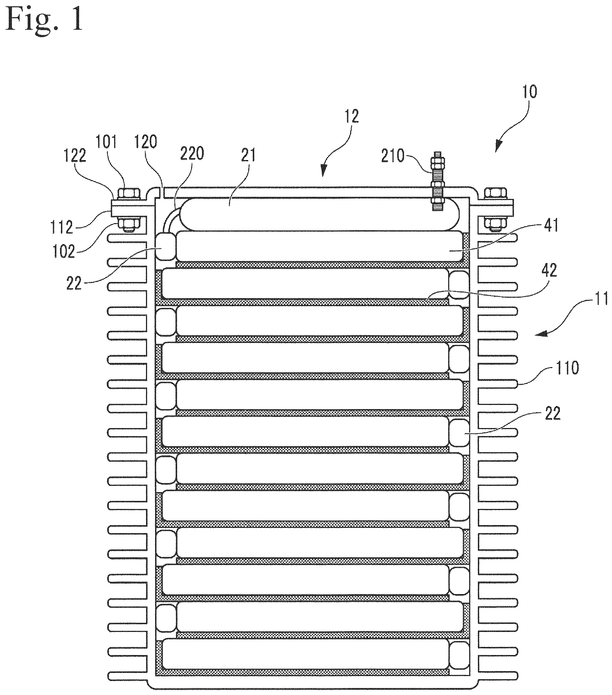

The housing 10 shown in Fig. 1 as a First Embodiment of the present invention includes a body portion 11 opening upward, and a rectangular plate-like cover portion 12 for closing the opening. The housing 10 preferably has a high thermal conductivity and is preferably composed of a lightweight metal, for example, in addition to aluminum, it is preferably made of magnesium or an alloy thereof. The plate thickness or wall thickness of the housing 10 is preferably thin from the viewpoint of heat dissipation performance and weight reduction, but it must be strong enough to withstand the pressure when the expansion/contraction members 21 and 22 expand, as will be described later. From this point of view, it is preferable that the thickness of the housing 10 be designed to fall within the range of 5 to 10 mm, for example.

A heat sink 110 is provided as a heat dissipation structure on the outside of the side wall of the body portion 11. It is preferable that the heat sink 110 be integrated with the body portion 11. Aluminum casting (die casting) can produce this integral structure. In addition, cutting from a block or fabrication using a 3D printer is also possible. In a structure in which a separate heat sink contacts the surface of the housing 10, thermal contact resistance is generated at the contact interface between them, thereby hindering heat transfer. If a separate heat sink is unavoidably used, the contact surface with the housing 10 must be brazed or the contact surface must be pressurized with a pressure of 0.1 MPa or more via a thermally conductive sheet. The heat dissipation structure may be any uneven structure that increases the surface area of the outside wall of the housing 10 or the body portion 11.

A ventilation hole 120 is formed in the cover portion 12. The diameter or width of the ventilation hole 120 is preferably designed to be, for example, about 1 mm to prevent dust and water from entering while maintaining air permeability. The number of ventilation holes 120 is preferably one. A second flange portion 122 is formed on the periphery of the cover portion 12 to protrude outward over the entire circumference. It should be noted that the position of the ventilation hole 120 is not limited to the cover portion 12 and may be the side or bottom of the housing 10. The size of the hole is preferably 3 mm or less in diameter, but it is not limited to a round hole, and it may be an opening of any shape with an equivalent area such as a square hole or a slit shape. If the housing 10 is placed in a space that is guaranteed to be dustproof and waterproof, the housing 10 itself does not have to be dustproof and waterproof.

A plurality of bolts 101 passing through a plurality of through holes formed in alignment with each of a first flange portion 112 and the second flange portion 122 are respectively fastened to a plurality of nuts 102, whereby the body portion 11 is closed by the cover portion 12. For example, an annular sealing member such as an O-ring is arranged between the first flange portion 112 and the second flange portion 122 to seal the body portion 11 and the cover portion 12.

A plurality of rectangular plate-shaped secondary battery cells 41 are stacked on the body portion 11 with a thermally conductive sheet 42 interposed therebetween. In the example in Fig. 1, twelve secondary battery cells 41 are accommodated in the internal space of the body portion 11 in a state in which they are stacked with the thermally conductive sheet 42 sandwiched between the lower surfaces thereof. The plurality of secondary battery cells 41 are alternately stacked such that one secondary battery cell 41 among the above is placed closer to one side wall portion (left side wall portion in Fig. 1) of a pair of opposing side wall portions of the housing 10, and other secondary battery cell 41 adjacent above and/or below that secondary battery cell 41 is placed closer to opposite side wall portion (right side wall portion in Fig. 1) of a pair of opposing side wall portions of the housing 10. Although the electrodes of each secondary battery cell 41 are not shown in Fig. 1, they are located on the front side or the back side of this cross section.

A portion of the thermally conductive sheet 42 may be omitted. Except for the upper surface of the uppermost secondary battery cell 41, each secondary battery cell 41 is in direct contact with the thermally conductive sheet 42 over substantially the entire upper surface and lower surface of each secondary battery cell 41.

A portion of the thermally conductive sheet 42 that protrudes from the secondary battery cell 41 is folded upward and interposed between the side surface of the secondary battery cell 41 and the inner surface of the body portion 11. The side surface of the secondary battery cell 41 is neither a surface provided with an electrode nor a surface opposite to a surface provided with an electrode. In the example shown in Fig. 1, the protruding portion of the thermally conductive sheet 42 is in direct contact with the side surface of the secondary battery cell 41 and the inner surface of the body portion 11.

The stacked secondary battery cells 41 and thermally conductive sheet 42 are pressed against the lower surface of the housing 10 by the first expansion/contraction member 21 placed thereon. In addition, an individual second expansion/contraction member 22 is installed at one end of each secondary battery cell 41, and the one end is pressed to the inner side surface of the housing via the thermally conductive sheet 42.

The first expansion/contraction member 21 placed on the upper surface of the secondary battery cells 41 and the second expansion/contraction member 22 placed at the end of each secondary battery cell are connected to each other by a communication tube 220 (none of which are shown). An injection valve 210 passing through the housing is connected to any one of the first expansion/contraction member 21 and the second expansion/contraction member 22. Therefore, when a gas such as air or nitrogen gas is injected from the injection valve 210, all the expansion/contraction members 21 and 22 inside the housing 10 are inflated with the same internal pressure and press the secondary battery cells 41 and the thermally conductive sheet 42.

Due to the above structure, the thermally conductive sheet 42 interposed between the layers of the stacked secondary battery cells 41 efficiently transmits the heat generated by the secondary battery cells 41 to the ends of the secondary battery cells 41 by being pressed, and further to the inner surface of the housing 10. Since the housing 10 is made of metal with high thermal conductivity and light weight, the heat generated by the secondary battery cells 41 is efficiently released into the air from the heat sink 110 on the outer surface thereof.

Although the secondary battery cell 41 is generally a lithium-ion battery cell, it is not limited to this, and various new batteries under development such as all-solid-state batteries may be employed. The heat generation density is not always the same depending on the type of battery, but heat is always generated by charging and discharging.

The number and total volume of the secondary battery cells 41 installed in the housing 10 are determined by the weight and cruising distance of the vehicle to be driven.

As shown in Fig. 1, the housing 10 includes a first expansion/contraction member 21 as a first pressure mechanism and a plurality of second expansion/contraction members 22 as a second pressure mechanism.

Each of the first expansion/contraction member 21 and the second expansion/contraction member 22 is connected to each other by a communication tube 220 (none of which are shown), and gas such as air or nitrogen gas or the like is supplied from an injection valve 210 penetrating the housing 10. When gas is injected, all the expansion/contraction members 21 and 22 in the housing 10 expand with the same internal pressure and press the secondary battery cells 41 and the thermally conductive sheet 42.

The internal pressures of the first expansion/contraction member 21, the second expansion/contraction member 22, and the communication tube 220 are preferably kept so as to have a gauge pressure of 0.1 MPa (1 kg/cm²) at room temperature. The reason for this is to optimally control the function of the thermally conductive sheet 42, which will be described later.

The expansion/contraction member 21 and 22 contact the secondary battery cells 41 at the above pressure at the time of gas charging. Since the temperature of the secondary battery cell 41 changes depending on the charging and discharging conditions, the temperature of the gas filled in the expansion/contraction members 21 and 22 follows the former, although there is a time lag.

For example, if the temperature of the secondary battery cells rise to 80 °C during high-speed driving or fast charging, the internal pressure of the expansion/contraction members 21 and 22 becomes 0.12 MPa according to the Boyle-Charles' law.

On the other hand, if the temperature of the secondary battery cells 41 drops to 0 °C after the vehicle has been parked for a long time in a cold region, the internal pressure of the expansion/contraction members 21 and 22 will be 0.093 MPa by similar calculation.

Such a phenomenon in which the internal pressure of the gas-inflatable tubes (expansion/contraction members 21 and 22) changes in response to the temperature of the secondary battery cells 41 performs an important function in effectively utilizing the properties of the thermally conductive sheet 42, which will be described later.

Another important function of the expansion/contraction members 21 and 22 of the lithium-ion battery is to always adhere to the lithium-ion battery and press the heat conductive sheet 42. Lithium-ion batteries slightly expand when charged and slightly contract when discharged. This phenomenon is called "lithium-ion battery breathing". Lithium-ion batteries at the end of their service life tend to expand due to deterioration of the internal electrolyte. The advantage of the expansion/contraction members 21 and 22 is that it can always maintain close contact even with such deformation.

As shown in Fig. 1, the first expansion/contraction member 21 is arranged between the inner surface of the cover portion 12 and the uppermost secondary battery cell 41. The second expansion/contraction member 22 is arranged between the side surface of the secondary battery cell 41 opposite to the side surface in contact with the protruding portion of the heat conductive sheet 42 and the inner surface of the body portion 11. The second expansion/contraction member 22 is arranged between the secondary battery cell 41 placed closer to one side wall (the left side wall in Fig. 1) of the housing 10 and the other side wall. Another second expansion/contraction member 22 is arranged between the secondary battery cell 41 that is adjacent above and/or below that secondary battery cell 41 and is placed closer to another side wall portion (right side wall portion in Fig. 1).

The expansion/contraction member 22 and the communication tube 220 are preferably made of rubber similar to the tube of a bicycle tire, and the thickness thereof may be about 1 to 2 mm. In addition, a material having airtightness and elasticity may be used.

The injection valve 210 may be equivalent to those for tires such as bicycles and automobiles. When inflating, a bicycle or car tire inflator can be used.

The gas to be injected must be non-flammable, and air is generally used, but nitrogen gas is less likely to leak. Therefore, nitrogen gas has the advantage of reducing the frequency of internal pressure adjustment.

The thermally conductive sheet 42 is made of, for example, a carbon sheet (also known as an expanded graphite sheet). The carbon sheet is formed by molding expanded graphite into a sheet shape, is flexible, and adheres to the contact surface, and it has the effect of reducing the thermal contact resistance. The thermal conductivity in the thickness direction of the carbon sheet is about 5 (W/mK), the thermal conductivity in the plane direction is about 200 (W/mK), and the thermal contact resistance is about 0.9 to 1.1×10⁻⁴ (m²K/W) in the case of 0.2 mm thick sheet.

In general, the pressure required to reduce the thermal contact resistance depends on the flatness and surface finish of the contact surfaces. The presence of thermal contact resistance at the contact surface always exists at the contact surface between solids.

According to a published patent, Thermoelectric Conversion Module (Japanese Patent No. 4829552), when two copper blocks with mirror-like flat surfaces are brought into contact with each other at a pressure of 0.04 MPa (0.4 kg/cm²), the thermal contact resistance is 14×10⁻⁴ (m²K/W) at 100 °C, and 10×10⁻⁴ (m² K/W) at 300 to 500 °C. However, when a carbon sheet is interposed in this contact interface, 1×10⁻⁴ (m² K/W) is achieved over the entire temperature range. This is 1/10 or less of the case without the carbon sheet. That is, the use of the carbon sheet can reduce the thermal contact resistance to 1/10 or less.

Regarding the thickness of the thermally conductive sheet, 1 mm is optimal from the viewpoint of thermal conductivity performance and availability. The performance of a thermally conductive sheet that receives heat between the laminated surfaces of secondary battery cells to conduct heat to the end of the secondary battery cell is proportional to the cross-sectional area of the sheet, that is, the product of the width and the thickness of the sheet. In addition, due to its cushioning properties, the thermally conductive sheet must always be in close contact with the secondary battery cells that breathe during charging and discharging. From these viewpoints, a certain degree of thickness is required, and 1 mm is optimal. However, the thickness is not limited to this, and the thickness may be in the range of 1 to 2 mm.

The thermally conductive sheet 42 is not limited to the above carbon sheet, and various sheets having high thermal conductivity in the plane direction and low thermal contact resistance may be adopted. For example, although still under development, the thermally conductive sheet 42 may be composed of a sheet in which carbon fibers are oriented in one direction and a thermal conductivity of 1600 [W/mK] or more can be achieved in the orientation direction.

### Function

When gas such as air or nitrogen gas is supplied to the inner space of the first expansion/contraction member 21 through the injection valve 210, the gas is also supplied to the internal space of the plurality of second expansion/contraction member 22 directly or indirectly connected to the first expansion/contraction member 21.

When the internal space of the first expansion/contraction member 21 is pressurized, the first expansion/contraction member 21 is expanded, and the plurality of secondary battery cells 41 stacked with the thermally conductive sheet 42 interposed therebetween is vertically expanded. The thermally conductive sheet 42 has a property of reducing thermal contact resistance when pressure is applied in its thickness direction. Thereby, heat is efficiently conducted to the thermally conductive sheet 42 in contact with the secondary battery cell 41. In addition, since the thermal conductivity in the plane direction of the thermally conductive sheet 42 is relatively high, the heat conducted from the secondary battery cells 41 to the thermally conductive sheet 42 is efficiently transferred in the plane direction of the thermally conductive sheet 42.

Similarly, the internal space of the second expansion/contraction member 22 is pressurized, the second expansion/contraction member 22 expands, and each of the plurality of secondary battery cells 41 is pressed in the direction of pressing the protruding portion of the thermally conductive sheet 42 to the inner surface of the housing 10. As a result, the protruding portion of the thermally conductive sheet 42 and the inner surface of the housing 10 are brought into close contact, and heat conducted from the secondary battery cell 41 through the thermally conductive sheet 42 is efficiently transferred to the housing 10. Since there is the heat sink 110 as a heat dissipation structure outside the housing 10, the heat is efficiently released to the external space of the housing 10.

As an example of the thermally conductive sheet 42, the carbon sheet is the most typical one. It has a pressure dependent thermal contact resistance. Table 1 shows the relationship between the temperature and pressure of the gas in the internal space of each of the first expansion/contraction member 21 and the second expansion/contraction member 22 and the thermal contact resistance of the carbon sheet as the thermally conductive sheet 42.

**Table 1**

| Pressure dependency of thermal contact resistance of carbon sheet | | |
|---|---|---|
| Temperature of expansion / contraction member (°C) | Pressure (MPa) | Thermal contact resistance (m²K/W) |
| 0 | 0.093 | 1.2 × 10⁻⁴ |
| 20 | 0.10 | 1.1 × 10⁻⁴ |
| 80 | 0.12 | 0.95 × 10⁻⁴ |

As shown in Table 1, when the temperature of the secondary battery cell 41 rises and the temperature of the gas in the internal space of each of the first expansion/contraction member 21 and the second expansion/contraction member 22 rises, the pressure increases, accordingly the thermal contact resistance of the thermally conductive sheet 42 is reduced, and the heat dissipation efficiency of the secondary battery via the thermally conductive sheet 42 is enhanced.

On the other hand, in a cold region, when the temperature of the secondary battery cell 41 of the secondary battery and the temperature of the first expansion/contraction member 21 and the second expansion/contraction member 22 drops to about 0 °C, the pressure decreases and the thermal contact resistance of the thermally conductive sheet 42 increases, and the heat dissipation capability of the secondary battery is suppressed. Since the optimum temperature range from the viewpoint of the performance of the secondary battery is 25 to 35 °C, suppressing the heat dissipation ability at such a low temperature is a preferable characteristic from the viewpoint of maintaining the secondary battery at an appropriate temperature.

As described above, the housing 10 having the above structure has a self-regulating property that maintains the secondary battery cell 41 at an appropriate temperature through interaction between the first and second expansion/contraction members 21 and 22 and the thermally conductive sheet 42. This characteristic is derived from characteristics inherent to the material properties, such as the expansion/contraction of gas and the dependence of the thermal contact resistance of the thermally conductive sheet 42 on the applied pressure, and it is also an advantage that the performance is maintained for long term with less risk of failure.

The temperature distribution of the secondary battery cell 41 in the structure of the present invention is calculated based on the condition shown in Table 2. These design parameters are selected based on the specifications of present small electric vehicles.

**Table 2**

| Dimensions of each secondary battery cell | 100mm × 100mm × 10mm |
|---|---|
| Heat generation density of each secondary battery cell | 3.5W(during rated running) /2.0W(during stop/charging) |
| Outside temperature | 20°C |
| Heat transfer coefficient of heat sink outside the housing | 200W/m²K(during rated running) /100W/m²K(during stop/charging) |
| Internal pressure of expansion /contraction member | 0.1MPa |
| Carbon sheet thickness | 1.0mm |

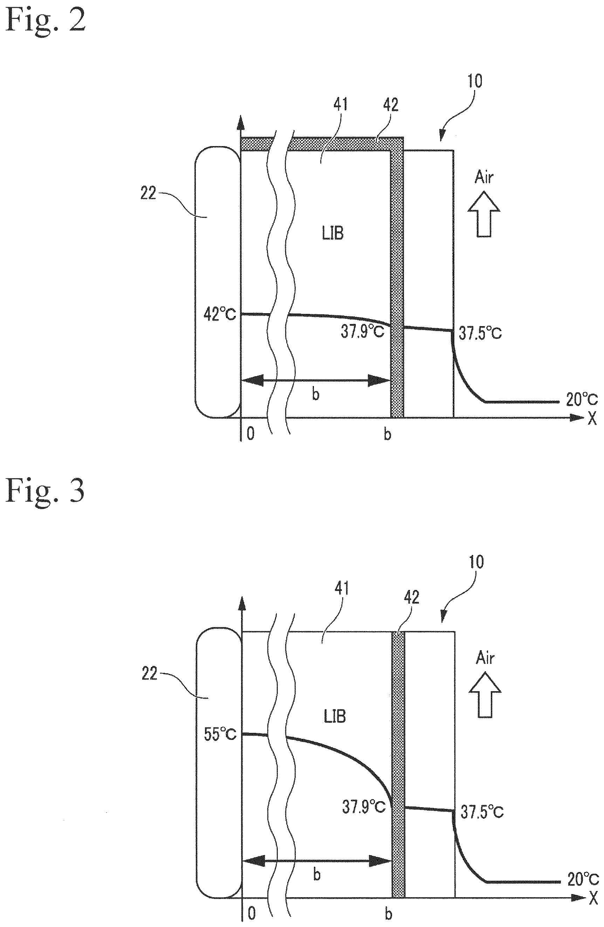

Fig. 2 shows the calculation results of the temperature distribution in the plane direction of the secondary battery cell 41 and the temperature distribution in the thickness direction of the housing 10 during rated driving in the case (example) according to the First Embodiment. In the figure, the horizontal axis (abscissa) indicates the position of each member, and the vertical axis (ordinate) indicates the temperature.

The maximum temperature of the secondary battery cell 41 is 42 °C at the contact surface with the second expansion/contraction member 22, which is kept within the optimum temperature range. The outer surface temperature of the housing 10 with the heat sink 110 is 37.5 °C, which is a safe temperature to touch.

For comparison, Fig. 3 is the result under the same conditions as in Fig. 2, however, the thermally conductive sheet 42 exists only between the side surface of the secondary battery cell 41 and the inner surface of the housing 10. The calculation results of the temperature distribution in the plane direction of the secondary battery cell 41 and the temperature distribution in the thickness direction of the housing 10 during rated driving are also shown. The temperature of the secondary battery cell 41 on the side surface that is in contact with the second expansion/contraction member 22 is 55 °C (maximum temperature), which is preferably lower from the viewpoint of performance and durability. However, even in this structure, the thermally conductive sheet 42 interposed between the end portion of the secondary battery cell 41 and the inner surface of the housing 10 functions as a heat dissipator. As described above, the effectiveness of the thermally conductive sheet 42 interposed between the layers of the secondary battery cells 41 is clear from the comparison between Fig. 2 and Fig. 3. In addition, it can be assumed that the maximum temperature of the secondary battery cell 41 will be significantly higher than above 55 °C if the heat conductive sheet 42 is not used at all.

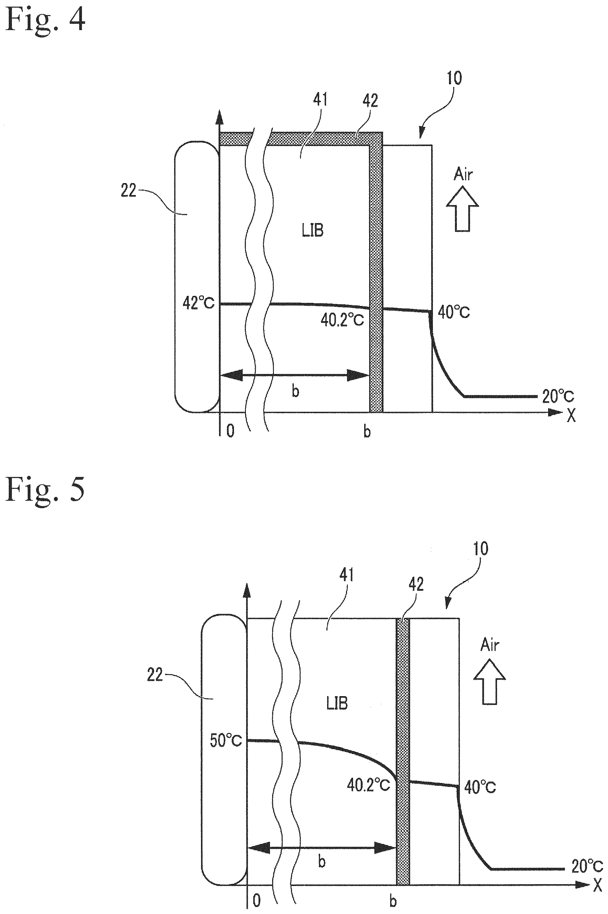

Fig. 4 shows the calculation results of the temperature distribution in the plane direction of the secondary battery cell 41 and the temperature distribution in the thickness direction of the housing 10 at the time of stopping and charging in the case (example) according to the First Embodiment. The maximum temperature of the secondary battery cell 41 is 42 °C at the contact surface with the second expansion/contraction member 22, which is kept within the optimum temperature range. The outer surface temperature of the housing 10 with the heat sink 110 is 40 °C, which is a safe temperature to touch.

For comparison, Fig. 5 shows, under the same conditions as in Fig. 2, the calculation results of the temperature distribution in the plane direction of the secondary battery cell 41 and the temperature distribution in the thickness direction of the housing 10 at the time of stopping and charging when the heat conductive sheet 42 exists only between the side surface of the secondary battery cell 41 and the inner surface of the housing 10. The maximum temperature of the secondary battery cell 41 is 50 °C at the contact surface with the second expansion/contraction member 22, which is preferably lower from the viewpoint of performance and durability. However, even in this structure, the thermally conductive sheet 42 interposed between the end portion of the secondary battery cell 41 and the inner surface of the housing 10 functions as a heat dissipator. As described above, the effectiveness of the thermally conductive sheet 42 interposed between the layers of the secondary battery cells 41 is also clear from the comparison between Figs. 4 and 5.

### Second Embodiment

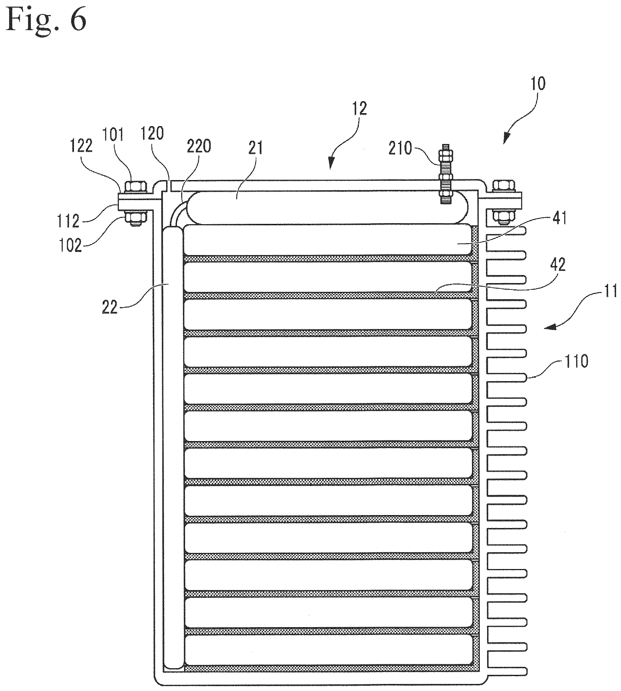

Fig. 6 shows a housing 10 as a second embodiment of the invention. Differences from the housing 10 (see Fig. 1) of the First Embodiment will be described, and the same reference numerals will be used for the structures that are the same as, or correspond to, the First Embodiment, and descriptions thereof will be omitted. In the second embodiment, a plurality of secondary battery cells 41 are stacked so as to be placed closer to one side wall portion (right side wall portion in Fig. 6) of the housing 10. The protruding portion of the thermally conductive sheet 42 is interposed between one side of the plurality of secondary battery cells 41 and the one side wall portion of the housing 10. A single second expansion/contraction member 22 as a second pressure mechanism is arranged between the other side wall portion (the left side wall portion in Fig. 6) of the housing 10 and the plurality of secondary battery cells 41.

By pressurization of the internal space of the single second expansion/contraction member 22, the plurality of secondary battery cells 41 are collectively pressed to the wall of the housing 10 such that the protruding portions of the thermally conductive sheets 42 are pressed against the inner surface of one side wall of the housing 10. Therefore, the heat dissipation capability is inferior to that of the First Embodiment, but the advantage is that the structure is simple.

### Third Embodiment

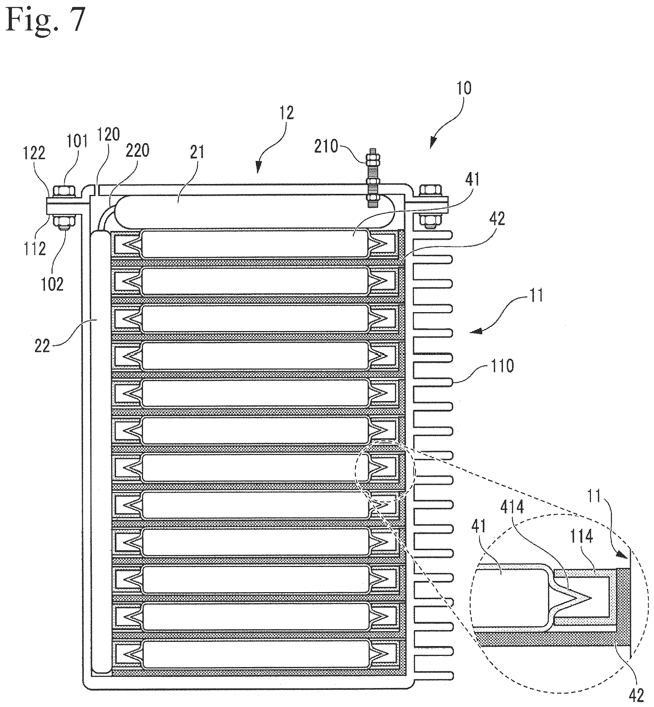

Fig. 7 shows a housing 10 as a third embodiment of the invention. Differences from the housing 10 of the Second Embodiment (see Fig. 6) will be described, and the same reference numerals will be used for the structures that are the same as, or correspond to, the Second Embodiment, and descriptions thereof will be omitted. In the Third Embodiment, the secondary battery cell 41 is composed of a laminate cell, and is wrapped or encased by, for example, an aluminum-coated polymer outer skin. Therefore, two side edges constitute pointed edges 414 with sharp edges. One of the pointed edges 414 is provided with an electrode (not shown). In such a laminated cell, it is common to apply pressure from one side of the opposing surfaces having no electrodes to the other side, as in the above-described First Embodiment and Second Embodiment. However, in this embodiment, a structure is shown in which the opposing surfaces with sharp edges on both sides are pressed.

In this embodiment, if the pointed edge 414 is strongly pressed, the pointed edge 414 may be crushed and the secondary battery cell 41 may be damaged. For this reason, the protection member 114 is placed on the sharp portions of both ends, the pressure of the second expansion/contraction member 22 is transmitted to the secondary battery cells 41 without damaging the wrapping, and the pressure of the secondary battery cells 41 is transferred to the thermally conductive sheets 42 and housing 10.

The secondary battery cell 41 is pressed via one protection member 114 by the second expansion/contraction member 22 arranged on one side, and the protruding portion of the thermally conductive sheet 42 arranged on the otherside is pressed against the inner surface of the housing via the protection member 114.

It should be noted that it is also possible to simultaneously apply pressure from the side surface of the wrapping having no electrode and apply pressure from the opposing surfaces with sharp edges. In this case, the protruding portions of the thermally conductive sheet 42 is formed at both ends thereof and are bent.

The protection member 114 must be flame-retardant, have a heat resistance temperature of 100 °C or higher, and have a strength sufficient to withstand the pressure applied by the second expansion/contraction member 22. Moreover, it is desirable that it be lightweight and suitable for series production. Examples include aluminum and plastic.

The depth of the protection member 114 (size in the horizontal direction of the pair of upper and lower portions in Fig. 7) is preferably more than the amount of projection of the pointed edges 414 at both ends of the secondary battery cell 41 (size in the horizontal direction in Fig. 7). The thickness of the protection member 114 (size in the vertical direction in Fig. 7) is preferably slightly smaller than the thickness of the secondary battery cell 41 (size in the vertical direction in Fig. 7). It is desirable that the width of the protection member 114 (the size in the direction perpendicular to the drawing of Fig. 7) is slightly smaller than the width of the secondary battery cell 41.

### Fourth Embodiment

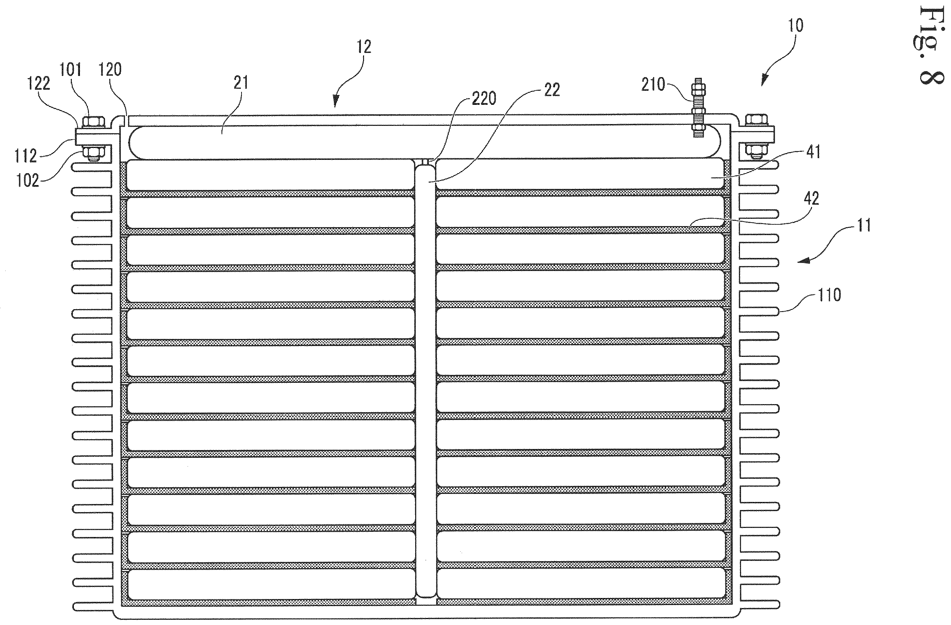

Fig. 8 shows a housing 10 as a Fourth Embodiment of the invention. Differences from the housing 10 (see Fig. 1) of the First Embodiment will be described, and the same reference numerals will be used for the structures that are the same as, or correspond to, the First Embodiment, and descriptions thereof will be omitted. In the Fourth Embodiment, two secondary battery cell groups composed of a plurality of secondary battery cells 41 stacked with a thermally conductive sheet 42 interposed therebetween are arranged side by side in the internal space of the housing 10. Between the uppermost secondary battery cells 41 constituting each of the two secondary battery cell groups and the cover portion 12 (the upper end portion of the housing 10), a single expansion/contraction member 21 as a first pressure mechanism is arranged. A single second expansion/contraction member 22 as a second pressure mechanism is arranged between two secondary battery cell groups. In the secondary battery cell 41 constituting each of the secondary battery cell groups on one side (the left side in Fig. 8), the protruding portion of the thermally conductive sheet 42 is interposed between the second expansion/contraction member 22 and one side wall portion (the left side wall portion in Fig. 8) of the housing 10. Similarly, in the secondary battery cell 41 constituting each of the other (right side of Fig. 8) secondary battery cell groups, the protruding portion of the thermally conductive sheet 42 is interposed between the second expansion/contraction member 22 and the other side wall portion (right side wall portion in Fig. 8) of the housing 10.

### Fifth Embodiment

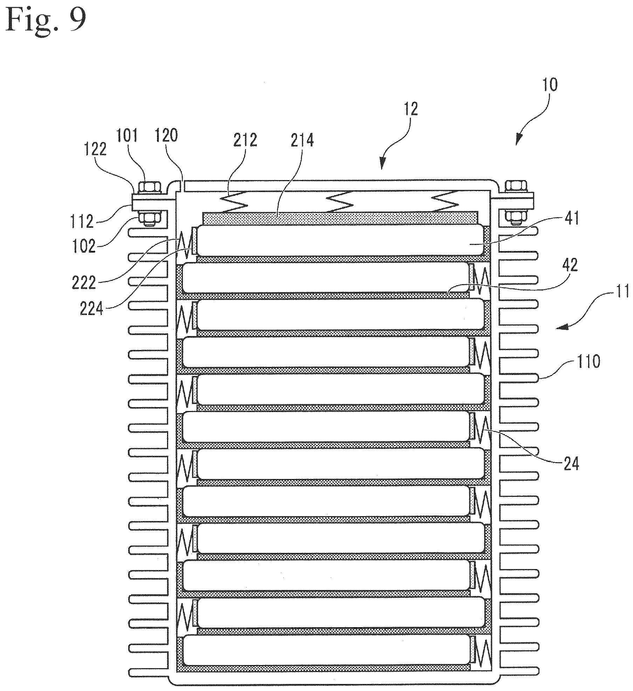

Fig. 9 shows a housing 10 as a Fifth Embodiment of the invention. Differences from the housing 10 (see Fig. 1) of the First Embodiment will be described, and the same reference numerals will be used for the same or corresponding structures, and description thereof will be omitted. In the Fifth Embodiment, the first pressure mechanism is composed of the first elastic biasing member 212 and the first pressing plate 214, and the second pressure mechanism is composed of the second elastic biasing member 222 and the second pressing plate 224.

The first elastic biasing member 212 is composed of a spring member having a reverse reaction point on the upper wall portion of the housing 10 or the cover portion 12 and a reaction point on the first pressing plate 214 contacting the side surface (upper and lower surfaces in Fig. 9) of the secondary battery cell 41.

The second elastic biasing member 222 is composed of a spring member having a reverse reaction point on the side wall portion of the housing 10 and reaction point on the second pressing plate 224 contacting the end surface (left and right surface in Fig 9) of the secondary battery cell 41.

In this embodiment, although the spring member applies a constant pressure regardless of the temperature conditions, self-controlling ability to maintain the secondary battery cell 41 at an appropriate temperature due to the interaction between the expansion/contraction member and the thermally conductive sheet cannot be expected, there is no need to replenish the gas in the expansion/contraction member. The number, installation position and repulsive force of the spring members are selected so that a uniform pressure force can be realized with the same size as when the expansion/contraction member is employed. The first pressing plate 214 must be strong enough not to be deformed even when pressed by the spring member. As requirements for the material, flame retardancy and a heat resistance temperature of 100 °C or higher, such as aluminum, are suitable.

### Explanation of Reference Numerals

- 10: housing
- 11: body portion
- 12: cover portion
- 21: first expansion/contraction member (first pressure mechanism)
- 22: second expansion/contraction member (second pressure mechanism)
- 41: secondary battery cell
- 42: thermally conductive sheet
- 101: bolt
- 102: nut
- 110: heat sink (heat dissipation structure)
- 112: first flange portion
- 114: protection member (intermediate member)
- 120: ventilation hole
- 122: second flange portion
- 210: injection valve
- 212: first elastic biasing member (first pressure mechanism)
- 214: first pressing plate
- 220: communication tube
- 222: second elastic biasing member (second pressure mechanism)
- 224: second pressing plate
- 414: pointed edge

## Claims

1. A housing accommodating a plurality of secondary battery cells in an inner space thereof and having a heat dissipation structure on an outside thereof, the housing comprising:
a first pressing structure that presses the plurality of secondary battery cells that are stacked with a thermally conductive sheet interposed therebetween in a stacking direction;
a second pressing structure that presses portions of the thermally conductive sheet that protrude laterally from the plurality of secondary battery cells against an inner surface of the housing.

2. The housing according to claim 1, wherein the second pressing structure presses at least one secondary battery cell among the plurality of battery cells in a direction from one side surface to the other side surface of the mutually opposing surfaces having no electrodes, whereby a protruding portion of the thermally conductive sheet interposed between the other side surface of the at least one secondary battery cell and the inner side surface of the housing is pressed against the inner side surface of the housing.

3. The housing according to claim 1, wherein an intermediate member is installed between the other side surface of the battery cell and the inner side surface of the housing, and the second pressing structure presses at least one secondary battery cell among the plurality of battery cells in a direction from one side surface to the other side surface, whereby a protruding portion of the thermally conductive sheet interposed between the intermediate member and the inner side surface of the housing is pressed against the inner side surface of the housing.

4. The housing according to any one of claims 1 to 3, wherein at least one of the first pressing structure and the second pressing structure is composed of an inflatable container filled with gas inside.

5. The housing according to claim 4, wherein at least a portion of the container is composed of a thermally conductive member.

6. The housing according to any one of claims 1 to 5, wherein at least one of the first pressing structure and the second pressing structure is composed of an elastic biasing member.

7. The housing according to any one of claims 1 to 6, wherein the thermally conductive sheet has a thermal conductivity of 100 W/mK or more in a plane direction and has the property of reducing the thermal contact resistance according to the pressure acting in a thickness direction.

8. The housing according to any one of claims 1 to 7, wherein a hole with a diameter of 3 mm or less or an opening of any shape with an equivalent area on the side, bottom, or a cover of the housing is provided.
